# EUROPÄISCHE PATENTSCHRIFT

(11) **EP 3 073 438 B1**
(45) Veröffentlichungstag und Bekanntmachung des Hinweises auf die Patenterteilung: **08.05.2019**
(21) Anmeldenummer: 16161341.9
(22) Anmeldetag: 21.03.2016
(51) Int. Cl.: G06Q 50/30

(54) **VERFAHREN ZUR ERMITTLUNG EINER ZUGEHÖRIGKEIT EINES FAHRZEUGS ZU EINER ABGASNORM SOWIE FAHRZEUG-COMPUTER**
METHOD FOR DETERMINING THE AFFILIATION OF A VEHICLE TO AN EMISSION STANDARD AND VEHICLE COMPUTER
PROCEDE DE DETERMINATION D'UNE APPARTENANCE D'UN VEHICULE AUTOMOBILE A UNE NORME RELATIVE AUX GAZ D'ECHAPPEMENT ET ORDINATEUR DE BORD

(30) Priorität: 23.03.2015 DE 102015205234
(43) Veröffentlichungstag der Anmeldung: 28.09.2016
(73) Patentinhaber: Volkswagen AG, 38440 Wolfsburg (DE)
(72) Erfinder: Gruner, Steffen, 38518 Gifhorn (DE)
(74) Vertreter: Gulde & Partner

(56) Entgegenhaltungen:
- EP-A1- 1 615 179
- WO-A2-2007/038513
- FR-A1- 2 926 147
- Anonymous: "OBD-II PIDs - Wikipedia", , 12 February 2015 (2015-02-12), XP055519458, Retrieved from the Internet: URL:https://en.wikipedia.org/w/index.php?t itle=OBD-II_PIDs&oldid=646775625 [retrieved on 2018-10-26]
- Anonymous: "Kennfelder über OBD selber überspielen?: Dieselschrauber Community", , 31 March 2005 (2005-03-31), XP055519191, Retrieved from the Internet: URL:https://community.dieselschrauber.org/ viewtopic.php?t=8940 [retrieved on 2018-10-25]

## Beschreibung

Die Erfindung betrifft ein Verfahren zur Ermittlung einer Zugehörigkeit eines Fahrzeugs zu einer Abgasnorm aus einer Gruppe von Abgasnormen, umfassend eine erste, insbesondere strenge, Abgasnorm und mindestens eine zweite, insbesondere weniger strenge, Abgasnorm. Die Erfindung betrifft ferner einen Fahrzeug-Computer, der zur Durchführung des Verfahrens eingerichtet ist, sowie ein entsprechendes Fahrzeug.

Weltweit existieren unterschiedliche Abgasnormen, welche Emissionsgrenzwerte für verschiedene Abgaskomponenten für Kraftfahrzeuge festlegen. Jedes Fahrzeug ist dabei einer Fahrzeugnorm zugeordnet und muss diese für eine vorbestimmte Kilometerleistung und Zeitspanne einhalten. In unterschiedlichen Regionen der Welt sowie abhängig von der Art des Motors (Otto oder Dieselmotor) als auch vom Fahrzeugtyp (PKW, LKW, Zweirad etc.) existieren unterschiedliche Abgasnormen. Die Abgasnorm liegt in einem Fahrzeug-Computer, beispielsweise Motorsteuergerät, gespeichert vor. Sie bestimmt einerseits die Steuerung des Verbrennungsmotors durch das Motorsteuergerät, indem bestimmte betriebspunktabhängige Betriebsparameter selektiert werden, wobei zu diesem Zweck unterschiedliche Kennfelder- und Kennlinien für die verschiedenen Abgasnormen eingesetzt werden. Andererseits definiert die Abgasnorm die Routinen der gesetzlich vorgeschrieben Onboard-Diagnostik, mit welcher die Funktion des Abgassystems routinemäßig überwacht wird.

Häufig sind Fahrzeug-Computer für den Einsatz in unterschiedlichen Motor- und Fahrzeugtypen oder in unterschiedlichen Kontinenten eingerichtet, sodass der Fahrzeug-Computer für die Verwendung unterschiedlicher Abgasnormen ausgerüstet und bedatet sein muss. In Abhängigkeit von dem im Fahrzeug-Computer selektierten Abgascode werden somit die Routinen für die Motorsteuerung sowie die Onboard-Diagnostik ausgewählt und verwendet. Im Falle der Verwendung mehrerer Abgasnormen innerhalb eines Fahrzeug-Computers muss sichergestellt werden, dass nicht eine Abgasnorm codiert wird, die nicht der für das Fahrzeug vorgeschriebenen Abgasnorm entspricht, insbesondere keine weniger strenge Abgasnorm ausgewählt ist. Beispielsweise kann bei Austausch eines Motorsteuergerätes in einer Werkstatt eine fehlerhafte Abgascodierung stattfinden, oder die Abgascodierung kann seitens des Kunden missbräuchlich manipuliert werden, beispielsweise um höhere Leitungsbereiche des Fahrzeugs darzustellen (sogenanntes Chip-Tuning).

EP 1 615 179 A1 beschreibt ein System, das die Speicherung der korrekten, nicht manipulierten Fahrzeug-Identifizierungsnummer (FIN oder VIN für *vehicle identification number*) in einen Fahrzeug-Computer, insbesondere der Motorsteuerung, der Getriebesteuerung oder einem Zentralcomputer, gewährleisten soll. Hierzu sendet ein erstes Mittel die VIN an den Fahrzeug-Computer, der die VIN speichert, sofern noch keine verifizierte VIN gespeichert ist. Anschließend sendet der Fahrzeug-Computer die gespeicherte VIN an ein zweites Mittel, welches eine Plausibilitätskontrolle der VIN vornimmt. Sofern das zweite Mittel die VIN verifiziert, sendet es eine Sperraufforderung an den Fahrzeug-Computer, der überprüft, ob bereits eine verifizierte VIN vorliegt. Ist dies der Fall, wird die Sperraufforderung abgewiesen, andernfalls wird die zuvor gespeicherte VIN verifiziert und gesperrt. Das erste Mittel kann eine manuelle Eingabe der zum Beispiel im Chassis eingeätzten VIN in den Fahrzeug-Computer sein, etwa nach einem Austausch des Fahrzeug-Computers. Die verifizierte und gesperrte VIN wird dann verwendet, um Diagnostik- und Kalibrierfunktionen im Fahrzeug durchzuführen. Hierfür werden bestimmte Stellen der VIN, die beispielsweise den Motortyp kennzeichnen, gelesen und die zugehörigen Kalibrierfunktionen und -parameter ermittelt und verwendet.

Die zuvor beschriebene Prozedur stellt die Speicherung der korrekten VIN sicher. Eine Schwachstelle kann sich aber dadurch ergeben, dass die Abgascodiertabelle oder die Prozedurzeile, welche die Abgascodiertabelle ausliest, vorsätzlich oder versehentlich manipuliert wird.

Der Erfindung liegt nun die Aufgabe zugrunde, ein Verfahren zur Verfügung zu stellen, mit dem die tatsächliche Zugehörigkeit eines Fahrzeugs zu einer Abgasnorm ermittelt werden kann und so eine korrekte Abgascodierung in einem Fahrzeug sichergestellt ist.

Diese Aufgabe wird durch ein Verfahren sowie durch einen Fahrzeug-Computer mit den Merkmalen der unabhängigen Ansprüche gelöst.

Das erfindungsgemäße Verfahren zur Ermittlung einer Zugehörigkeit eines Fahrzeugs zu einer Abgasnorm aus einer Gruppe von Abgasnormen, umfassend eine erste Abgasnorm und mindestens eine zweite Abgasnorm, umfasst die Schritte:
(a) Einlesen einer ersten Stelle oder ersten Gruppe von Stellen einer gespeicherten Fahrzeug-Identifizierungsnummer (VIN), Einlesen einer zweiten Stelle oder zweiten Gruppe von Stellen der VIN und Einlesen einer dritten Stelle oder dritten Gruppe von Stellen der Fahrzeug-Identifizierungsnummer (VIN),
(b) Bereitstellen eines Kennfelds (KF), welches der ersten Stelle oder ersten Gruppe von Stellen (S1) und der zweiten Stelle oder zweiten Gruppe von Stellen (S2) der Fahrzeug-Identifizierungsnummer (VIN) solche Kennwerte (KW) der dritten Stelle oder dritten Gruppe von Stellen (S3) von Fahrzeug-Identifizierungsnummern (VIN) zuordnet, die ein der ersten Abgasnorm zugehöriges Fahrzeug kennzeichnen,
(c) Vergleich der eingelesenen dritten Stelle oder dritten Gruppe von Stellen (S3) der Fahrzeug-Identifizierungsnummer (VIN) mit dem Kennwert (KW) aus dem Kennfeld (KF), das der eingelesenen ersten Stelle oder ersten Gruppe von Stellen (S1) und der eingelesenen zweiten Stelle oder zweiten Gruppe von Stellen (S2) der Fahrzeug-Identifizierungsnummer (VIN) zugeordnet ist, und
(d) in Abhängigkeit von einer festgestellten Übereinstimmung oder Nichtübereinstimmung des Kennwerts (KW) des Kennfelds (KF) und der eingelesenen dritten Stelle oder dritten Gruppe von Stellen (S3) der Fahrzeug-Identifizierungsnummer (VIN) feststellen, ob das Fahrzeug der ersten Abgasnorm zugehörig ist oder nicht,
(e) im Falle einer in Schritt (d) festgestellten Zugehörigkeit des Fahrzeugs zu der ersten Abgasnorm Vergleichen, ob eine im Fahrzeug-Computer (14) ausgewählte Abgasnorm der ersten Abgasnorm entspricht, und
(f) wenn in Schritt (e) festgestellt wird, dass die ausgewählte Abgascodierung der festgestellten ersten Abgasnorm nicht entspricht, Ausführen mindestens einer der folgenden Maßnahmen:
   Auswählen und Anwenden der ersten Abgasnorm im Fahrzeug-Computer (14), um zu verhindern, dass das Fahrzeug fehlerhaft mit einer weniger strengen Abgasnorm als der ersten Abgasnorm betrieben wird, oder
   Unterbinden einer Startfreigabe, wodurch das Fahrzeug nicht gestartet und bewegt werden kann,
   wobei zusätzlich folgende Maßnahme ausgeführt werden kann:
      Erzeugen eines Fehlersignals durch Speichern eines Fehlereintrags in einem Fehlerspeicher des Fahrzeugs.

Das Verfahren liest somit verschiedene Stellen oder Gruppen von Stellen der gespeicherten Fahrzeug-Identifizierungsnummer VIN ein, um in Abhängigkeit von diesen Stellen unter Verwendung eines speziellen Kennfelds, das für der ersten Abgasnorm unterliegenden Fahrzeugen aufgestellt ist, die Zugehörigkeit des Fahrzeugs zu der ersten Abgasnorm zu ermitteln. Auf diese Weise kann allein aus der VIN und dem besagten Kennfeld die dem Fahrzeug zugehörige Abgasnorm bestimmt werden. Dabei macht sich das Verfahren zunutze, dass die Kombination von drei geeigneten Stellen beziehungsweise Gruppen von Stellen der VIN eine Zuordnung des betreffenden Fahrzeugs zu einer Abgasnorm erlaubt, beispielsweise indem die Stellenkombination eine Identifizierung des Verkaufslands ermöglicht.

Dabei ist das Kennfeld so aufgebaut, dass nur solche Kennwerte für die dritte Stelle oder dritte Gruppe von Stellen in dem Kennfeld enthalten sind, die in Kombination mit der ersten und zweiten Stelle beziehungsweise ersten und zweiten Gruppe von Stellen ein Fahrzeug kennzeichnen, das der ersten Abgasnorm zugehörig ist. Für Kombination der ersten, zweiten und dritten Stelle beziehungsweise ersten, zweiten und dritten Gruppe von Stellen der VIN hingegen, deren korrespondierende Fahrzeuge nicht der strengsten Abgasnorm unterliegen, weist das Kennfeld vorzugsweise entweder keinen Eintrag auf oder einen Eintrag, der die Nichtzuordnung zu der ersten Abgasnorm identifiziert. Wenn gemäß einem abstrakten Beispiel die erste Stelle (S1) der VIN die Kennwerte S1 = a, b oder c annehmen kann und die zweite Stelle (S2) die Kennwerte S2 = A, B oder C, dann mögen sämtliche Kennwerte für die dritte Stelle (S3), die für die Kombination S1= a und S2 = B existieren, die Kennwerte (KW) α, β oder µ umfassen. Wenn in diesem Beispiel nur das Fahrzeug, das der Kombination S1 = a, S2 = B und S3 = µ entspricht, der ersten Abgasnorm unterliegt, dann enthält das Kennfeld nur für die Kombination S1 = a und S2 = B den Eintrag µ (nicht aber α oder β). Wenn gemäß diesem Beispiel das erfindungsgemäße Verfahren die Kennwerte S1 = a, S2 = B und S3 = α aus der gespeicherten VIN einliest, wird es für S1 = a und S2 = B den Kennwert KW = µ aus dem Kennfeld ermitteln und sodann feststellen, dass der aus der VIN eingelesene Wert S3 = α nicht dem entsprechenden Kennwert KW = µ entspricht. Hieraus folgt, dass das Fahrzeug nicht der ersten Abgasnorm (für die das Kennfeld aufgestellt ist) unterliegt.

In einer Abfrage des Verfahrens in Schritt (c) erfolgt also ein Vergleich des aus dem Kennfeld ermittelten Kennwerts für die dritte Stelle oder Gruppe von Stellen der VIN mit der aus der aktuellen VIN eingelesenen dritten Stelle oder dritten Gruppe von Stellen. Wird dann festgestellt, dass der Kennwert mit der eingelesenen dritten Stelle beziehungsweise dritten Gruppe von Stellen der VIN übereinstimmt, folgt, dass das Fahrzeug der ersten Abgasnorm zugehörig ist, das heißt der ersten Abgasnorm unterliegt. Wenn hingegen keine Übereinstimmung der eingelesenen dritten Stelle beziehungsweise dritten Gruppe von Stellen der VIN mit dem aus dem Kennfeld ermittelten Kennwert festgestellt wird, unterliegt das Fahrzeug nicht der ersten Abgasnorm, für die das Kennfeld aufgestellt ist.

In diesem Fall ist kein Eingriff notwendig, und das Verfahren kann an dieser Stelle enden. Wird hier hingegen festgestellt, dass das Fahrzeug der ersten Abgasnorm zugehörig ist, erfolgt eine zweite Abfrage, in der überprüft wird, ob die tatsächlich gespeicherte Abgascodierung des Fahrzeugs auch der erforderlichen ersten Abgasnorm entspricht. Sofern hier festgestellt wird, dass das Fahrzeug der ersten, strengeren Abgasnorm zugehörig ist, und diese auch korrekt codiert wurde, ist kein Eingriff notwendig und das Verfahren endet hier. Sofern in der Abfrage jedoch festgestellt wird, dass das Fahrzeug, obwohl es der ersten, strengeren Abgasnorm zugehörig ist, die erste Abgasnorm jedoch nicht der gespeicherten Abgascodierung entspricht, sondern zwangsläufig einer weniger strengen Abgasnorm, ist vorzugsweise vorgesehen, dass die Abgascodierung zwangsweise auf die erste Abgasnorm eingestellt wird, das heißt die erste Abgasnorm wird ausgewählt und angewendet, etwa um den Motor zu steuern oder Diagnostikroutinen zu wählen und auszuführen. Alternativ kann eine Freigabe des Fahrzeugs verweigert werden.

Die Fahrzeug-Identifizierungsnummer VIN ist eine international genormte, derzeitig siebzehnstellige Nummer. Sie dient der eindeutigen Identifizierbarkeit eines Kraftfahrzeugs. Die verschiedenen Stellen der VIN dienen nach festgelegten Schlüsseln beispielsweise der Kennzeichnung des Herstellers, der Baureihe, des Motortyps, des Fahrzeugtyps, des Modelljahres und anderen Merkmalen. Zudem enthält die VIN eine fortlaufende Nummer, um das individuelle Fahrzeug zu kennzeichnen.

Im Rahmen der vorliegenden Erfindung wird mit der Bezeichnung "erste, zweite oder dritte Stelle" eine einzige entsprechende Stelle (Ziffer) der VIN verstanden. Die Bezeichnung "Gruppe von Stellen" meint hingegen eine Mehrzahl von Stellen der VIN, die zur Kennzeichnung eines Parameters des Fahrzeugs zusammengefasst sind. Beispielsweise stellen die Stellen 1 bis 3 der VIN gemäß Konvention eine Gruppe von Stellen dar, die den Welthersteller des Fahrzeugs identifizieren.

Vorzugsweise liegt die Fahrzeug-Identifizierungsnummer in einer verschlüsselten und computerlesbaren Form gespeichert vor. Dies stellt sicher, dass sie nicht manipulierbar ist und das erfindungsgemäße Verfahren nicht durch eine Manipulation der VIN seitens des Kunden vereitelt werden kann. In besonders bevorzugter Ausführung wird die VIN automatisiert durch eine Datenbank des Fahrzeugherstellers verschlüsselt an einen Fahrzeug-Computer übertragen. Dabei handelt es sich insbesondere um denselben Fahrzeug-Computer, in dem der erfindungsgemäße Programmalgorithmus und/oder das Kennfeld gespeichert vorliegt, vorzugsweise um das Motorsteuergerät.

In bevorzugter Ausgestaltung der Erfindung entspricht die erste Stelle oder erste Gruppe von Stellen der VIN einer Codierung des Herstellers des Fahrzeugs. Typischerweise dienen die Stellen 1 bis 3 der VIN der Herstellerkennung (WMI für world manufacturer identifier). Zusammen mit der zweiten und dritten Stelle oder zweiten und dritten Gruppe von Stellen der VIN gibt die Herstellerkennung Aufschluss oder erlaubt zumindest eine Plausibilitätskontrolle darüber, ob das Fahrzeug der ersten Abgasnorm unterliegt oder nicht.

Die zweite Stelle oder zweite Gruppe von Stellen der gespeicherten VIN entspricht vorzugsweise einer Baureihenkennung des Fahrzeugs. Die Baureihenkennung wird vom Hersteller festgelegt und findet sich üblicherweise innerhalb der Stellen 4 bis 9 der VIN gemäß europäischer Verordnung, und an der Stelle 4 der VIN in den USA, Kanada und anderen Ländern. Zusammen mit der ersten und dritten Stelle oder ersten und dritten Gruppe von Stellen der VIN ermöglicht die Baureihenkennung die Erkennung oder zumindest eine Plausibilitätskontrolle, ob das Fahrzeug der ersten Abgasnorm unterliegt oder nicht.

Vorzugsweise wird als dritte Stelle oder dritte Gruppe von Stellen der gespeicherten VIN eine Motortypkennung des Fahrzeugs verwendet. Im europäischen Raum wird eine der Stellen 4 bis 9 der VIN für die Motortypkennung verwendet und im nordamerikanischen Raum die Stellen 6 und 7. Die Motortypkennung, insbesondere im Zusammenhang mit der ersten und zweiten Stelle oder ersten und zweiten Gruppe von Stellen der VIN ermöglicht eine Zuordnung, ob das Fahrzeug der ersten Abgasnorm zugeordnet ist oder nicht.

In bevorzugter Ausgestaltung der Erfindung entspricht die erste Abgasnorm, für welche das Kennfeld aufgestellt ist, einer strengeren Abgasnorm in Bezug auf die zumindest eine zweite Abgasnorm. Besonders bevorzugt handelt es sich bei der ersten Abgasnorm um die strengste Abgasnorm, für die der Fahrzeug-Computer eingerichtet, also bedatet ist. In diesem Fall ermöglicht das Verfahren eine Zuordnung des Fahrzeugs zu der strengeren beziehungsweise strengsten Abgasnorm und kann somit ihre Einhaltung gewährleisten. Dabei wird unter dem Begriff "strengere Abgasnorm" diejenige Norm verstanden, welche niedrigere Emissionen verlangt oder vergleichbare Emissionen in einem anspruchsvolleren Fahrzyklus.

In sehr vielen Fällen sind Fahrzeug-Computer für lediglich zwei Abgasnormen eingerichtet, beispielsweise für eine Abgasnorm des nordamerikanischen Raums und des europäischen Raums, wobei die nordamerikanische Abgasnorm in der Regel die strengere sein wird. In einem solchen Fall ist bei Verwendung eines einzigen Kennfelds eine eindeutige Zuordnung des Fahrzeugs zu einer Abgasnorm, insbesondere der strengeren Abgasnorm möglich. Im Falle einer Einrichtung (Bedatung) des Fahrzeug-Computers für mehr als zwei Abgasnormen kann auch die Verwendung von zwei oder mehr Kennfeldern im Rahmen der Erfindung vorgesehen sein. Jedoch führt selbst im Fall von mehr als zwei Abgasnormen die Verwendung eines einzigen Kennfelds bereits zu dem vorteilhaften Effekt, dass zumindest die Zuordnung zu der strengsten Abgasnorm überprüft werden kann.

In bevorzugter Ausführung der Erfindung erfolgt im Falle einer festgestellten Zugehörigkeit des Fahrzeugs zu der ersten Abgasnorm (e) ein Vergleich, ob eine im Fahrzeug-Computer ausgewählte Abgasnorm der ersten Abgasnorm entspricht. Mit anderen Worten wird der festgestellte Sollzustand (z. B. erste Abgasnorm) mit dem Istzustand verglichen, der durch die tatsächlich vorliegende Abgascodierung im Fahrzeug definiert ist. Auf diese Weise wird im Falle einer fehlerhaften Abgascodierung im Fahrzeug ein korrigierender Eingriff ermöglicht. Wenn in Schritt (e) festgestellt wird, dass die ausgewählte Abgascodierung (Istzustand) der festgestellten ersten Abgasnorm (Sollzustand) nicht entspricht, ist vorzugsweise vorgesehen, dass die erste Abgasnorm im Fahrzeug-Computer ausgewählt und angewendet wird und/oder ein Fehlersignal (insbesondere ein Fehlerspeichereintrag im Fahrzeug-Computer) erzeugt wird. Bei einer solchen "Zwangsanwendung" der als richtig identifizierten Abgasnorm wird sichergestellt, dass diese trotz vorheriger Falschcodierung zur Anwendung gelangt. Alternativ oder zusätzlich kann vorgesehen sein, dass eine Startfreigabe nicht erfolgt, das heißt das Fahrzeug nicht gestartet und bewegt werden kann. Das Fehlersignal, das entweder nur im Fehlerspeicher des Fahrzeugs als Fehlereintrag gespeichert wird oder auch optisch und/oder akustisch angezeigt werden kann, lässt eine vorherige Manipulation oder Fehlprogrammierung erkennen.

Die verschiedenen Abgasnormen, für die der Fahrzeug-Computer eingerichtet ist, sind vorzugsweise in einer Abgascodiertabelle (AC) gespeichert, wobei die strengste Abgasnorm der niedrigsten Cordierziffer, zum Beispiel 0 oder 1, zugeordnet ist. Dies ermöglicht eine eindeutige Erkennung der strengsten Abgasnorm durch die Prozedur.

Die Erfindung betrifft ferner einen Fahrzeug-Computer für ein Fahrzeug, der zur Durchführung des erfindungsgemäßen Verfahrens zur Ermittlung der Zugehörigkeit des Fahrzeugs zu einer Abgasnorm aus einer Gruppe von Abgasnormen, umfassend eine erste Abgasnorm und mindestens eine zweite Abgasnorm, eingerichtet ist.

Zu diesem Zweck umfasst der Fahrzeug-Computer insbesondere:
- einen computerlesbaren und computerausführbaren Programmalgorithmus zur Durchführung des Verfahrens;
- eine computerlesbare Fahrzeug-Identifizierungsnummer, mindestens umfassend eine erste Stelle oder erste Gruppe von Stellen, eine zweite Stelle oder zweite Gruppe von Stellen und eine dritte Stelle oder dritte Gruppe von Stellen; sowie
- ein computerlesbares Kennfeld, welches der ersten Stelle oder ersten Gruppe von Stellen und der zweiten Stelle oder zweiten Gruppe von Stellen der Fahrzeug-Identifizierungsnummer solche Kennwerte der dritten Stelle oder dritten Gruppe von Stellen von Fahrzeug-Identifizierungsnummern zuordnet, die ein der ersten Abgasnorm zugehöriges Fahrzeug kennzeichnen.

Die Fahrzeug-Identifizierungsnummer liegt vorzugsweise in einer verschlüsselten Form vor.

In erfindungsgemäßer Ausführung ist der Programmalgorithmus zur Ausführung folgender Schritte eingerichtet:
(a) Einlesen der ersten Stelle oder ersten Gruppe von Stellen der Fahrzeug-Identifizierungsnummer, Einlesen der zweiten Stelle oder zweiten Gruppe von Stellen der Fahrzeug-Identifizierungsnummer und Einlesen der dritten Stelle oder dritten Gruppe von Stellen der Fahrzeug-Identifizierungsnummer,
(b) Einlesen eines Kennwerts aus dem Kennfeld, wobei der Kennwert der in Schritt (a) eingelesenen ersten Stelle oder ersten Gruppe von Stellen und der zweiten Stelle oder zweiten Gruppe von Stellen der Fahrzeug-Identifizierungsnummer zugeordnet ist,
(c) Vergleich der in Schritt (a) eingelesenen dritten Stelle oder dritten Gruppe von Stellen der Fahrzeug-Identifizierungsnummer mit dem in Schritt (b) eingelesenen Kennwert aus dem Kennfeld, und
(d) Feststellen, ob das Fahrzeug der ersten Abgasnorm zugehörig ist oder nicht, in Abhängigkeit von einer festgestellten Übereinstimmung oder Nichtübereinstimmung des Kennwerts des Kennfelds und der eingelesenen dritten Stelle oder dritten Gruppe von Stellen der Fahrzeug-Identifizierungsnummer,
(e) im Falle einer in Schritt (d) festgestellten Zugehörigkeit des Fahrzeugs zu der ersten Abgasnorm Vergleichen, ob eine im Fahrzeug-Computer (14) ausgewählte Abgasnorm der ersten Abgasnorm entspricht, und
(f) wenn in Schritt (e) festgestellt wird, dass die ausgewählte Abgascodierung der festgestellten ersten Abgasnorm nicht entspricht, Ausführen mindestens einer der folgenden Maßnahmen:
   Auswählen und Anwenden der ersten Abgasnorm im Fahrzeug-Computer (14), um zu verhindern, dass das Fahrzeug fehlerhaft mit einer weniger strengen Abgasnorm als der ersten Abgasnorm betrieben wird, oder
   Unterbinden einer Startfreigabe, wodurch das Fahrzeug nicht gestartet und bewegt werden kann, wobei zusätzlich folgende Maßnahme ausgeführt werden kann:
      Erzeugen eines Fehlersignals durch Speichern eines Fehlereintrags in einem Fehlerspeicher des Fahrzeugs.

In weiterer Ausführung umfasst der Fahrzeug-Computer eine computerlesbare und gespeicherte Abgascodiertabelle, welche einer Mehrzahl von mindestens zwei Abgasnormen jeweils eine Abgascodierung zuordnet, wobei die strengste Abgasnorm vorzugsweise der ersten Stelle beziehungsweise der Abgascodierung mit der niedrigsten numerischen Zahl zugeordnet ist.

Bei dem Fahrzeug-Computer kann es sich insbesondere um die Motorsteuerung (Motorsteuergerät), welche den Betrieb des Verbrennungsmotors in Abhängigkeit von einem Motorbetriebspunkt und gegebenenfalls anderen Parametern steuert, eine Getriebesteuerung oder einen Zentralcomputer (Bordcomputer) handeln.

Der Programmalgorithmus, das Kennfeld, die Fahrzeug-Identifizierungsnummer sowie die Abgascodiertabelle können insbesondere in einem Speicher des Fahrzeug-Computers oder in verschiedenen Speichern, auch außerhalb des Fahrzeug-Computers in computerlesbarer Form gespeichert vorliegen.

Schließlich betrifft die Erfindung ein Fahrzeug, das den Fahrzeug-Computer gemäß der Erfindung umfasst.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein Kraftfahrzeug mit einer Verbrennungskraftmaschine und einem Fahrzeug-Computer gemäß der Erfindung;
- Figur 2: einen beispielhaften Aufbau einer Fahrzeug-Identifizierungsnummer (VIN);
- Figur 3: einen beispielhaften Aufbau einer Abgascordiertabelle (AC)
- Figur 4: ein erfindungsgemäßes Kennfeld (KF), und
- Figur 5: ein Fließdiagramm des erfindungsgemäßen Verfahrens.

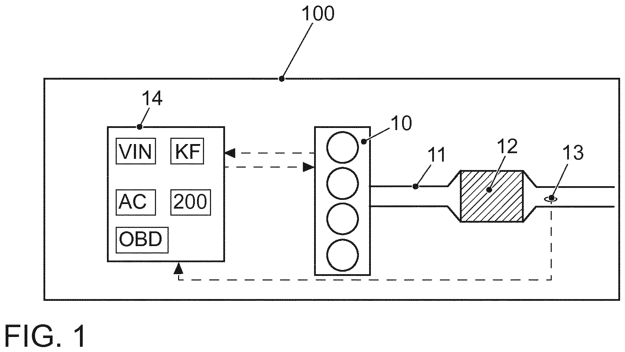

Figur 1 zeigt schematisch und beispielhaft ein insgesamt mit 100 bezeichnetes Fahrzeug gemäß einem bevorzugten Ausführungsbeispiel der Erfindung.

Das Fahrzeug 100 umfasst einen Verbrennungsmotor 10, in dessen Abgaskanal 11 eine Abgasnachbehandlungseinrichtung 12, beispielsweise ein Abgaskatalysator, angeordnet ist. Stromab der Abgasnachbehandlungseinrichtung 12 ist ein Gassensor im Abgaskanal 11 angeordnet, der eine gesetzlich limitierte Abgaskomponente, beispielsweise CO, erfasst.

Das Fahrzeug 100 umfasst ferner einen Fahrzeug-Computer 14, der hier ein Motorsteuergerät ist. Das Motorsteuergerät 14 umfasst üblicherweise einen Speicher (z.B. Festplatte) zur dauerhaften Speicherung von Daten und/oder Computerprogrammen, einen Prozessor zur Verarbeitung von Daten und Ausführen von Programmen, einen Arbeitsspeicher, zur temporären Speicherung aktuell ausgeführter Programme und hierzu erforderlichen Daten, und andere Komponenten. Das Motorsteuergerät 14 empfängt Signale des Verbrennungsmotors 10, beispielsweise ein Lastanforderungssignal durch einen Fahrer des Fahrzeugs und eine aktuelle Drehzahl des Verbrennungsmotors 10 etc. Ferner gehen in das Motorsteuergerät 14 Signale aus dem Abgastrakt des Verbrennungsmotors 10 ein, insbesondere das Signal des Abgassensors 13. In Abhängigkeit von den eingehenden Signalen, insbesondere in Abhängigkeit von dem aktuellen Betriebspunkt, der durch die Lastanforderung und die Drehzahl gekennzeichnet ist, steuert das Motorsteuergerät 14 den Betrieb des Verbrennungsmotors 10. Zu diesem Zweck enthält das Motorsteuergerät 14 verschiedene in dem Speicher gespeicherte Steueralgorithmen und Kennfelder, aus denen entsprechende Steuersignale ermittelt werden, mit denen das Motorsteuergerät 14 den Verbrennungsmotor 10 ansteuert. Diese umfassen beispielsweise Einspritzzeitpunkte, Einspritzdauern, Zündzeitpunkte, Drosselklappenöffnungen, Abgasrückführraten und andere. Dabei enthält das Motorsteuergerät 14 für unterschiedliche Abgasnormen individuelle Steueralgorithmen und/oder Kennfelder.

Das Motorsteuergerät 14 umfasst ferner eine Onboard-Diagnostik OBD, mit welcher die Funktion der Abgasnachbehandlung, insbesondere des Katalysators 12, überwacht werden kann. Die Onboard-Diagnostik enthält verschiedene Routinen zur Durchführung der Diagnose, wobei für unterschiedliche Abgasnormen individuelle Routinen für die ODB vorgesehen sind.

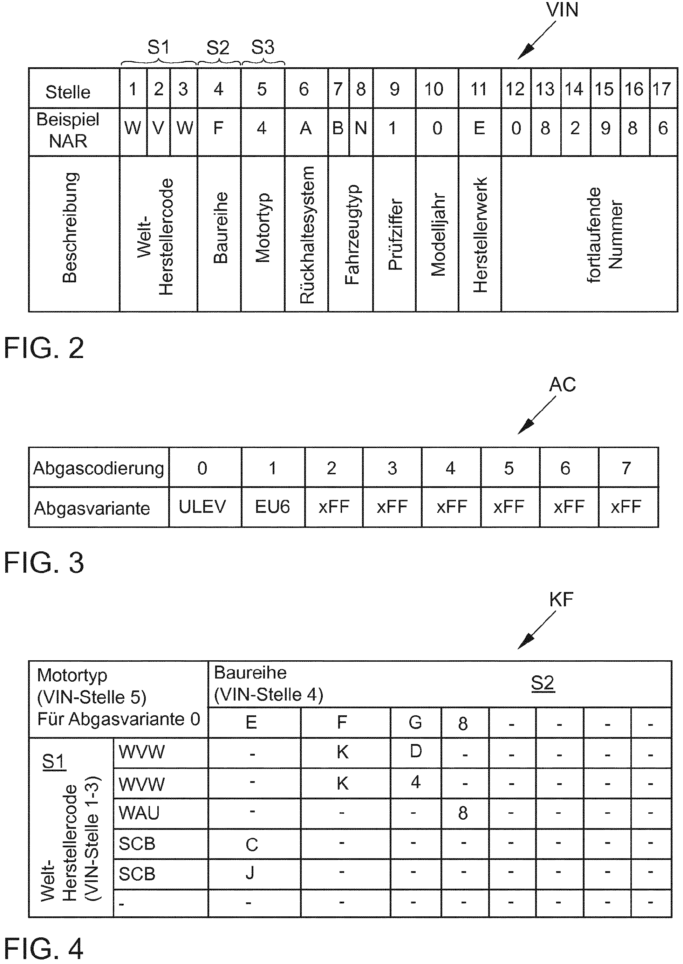

Weiterhin ist in dem Speicher des Motorsteuergeräts 14 die Fahrzeug-Identifizierungsnummer VIN gespeichert. Dabei liegt die VIN in einer verschlüsselten Form vor und wird über eine herstellereigene Routine automatisiert und verschlüsselt in das Motorsteuergerät 14 eingetragen. Einzelheiten zur VIN sind in Figur 2 beschrieben.

Das Motorsteuergerät 14 enthält ferner eine in dem Speicher gespeicherte Abgascodiertabelle AC, in welcher unterschiedliche gesetzliche Abgasnormen codiert sind. Einzelheiten zur Abgascodiertabelle AC sind in Figur 3 dargestellt.

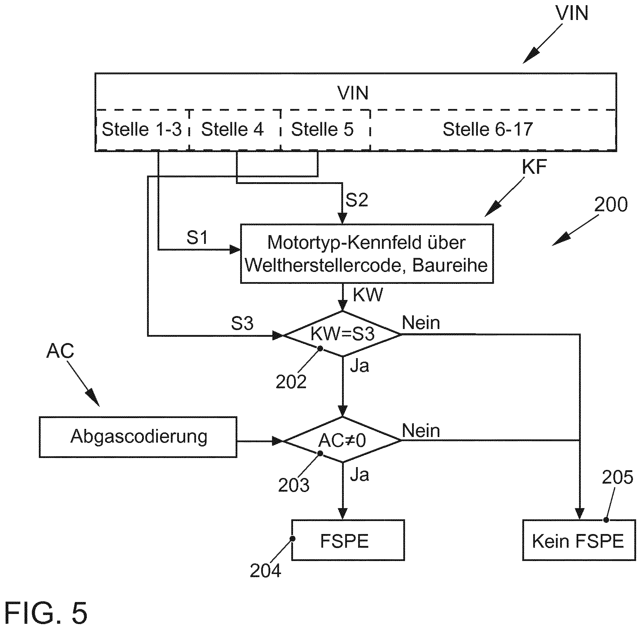

Das Motorsteuergerät 14 enthält in dem Speicher gespeicherte Bedatungen zu unterschiedlichen gesetzlichen Abgasnormen. Dies bedeutet, dass für die Motorsteuerung unterschiedliche Kennfelder für unterschiedliche Abgasnormen gespeichert sind. Ebenso enthält die oben erwähnte OBD unterschiedliche Diagnoseroutinen für unterschiedliche Abgasnormen. Die vorliegende Erfindung verhindert eine beabsichtigte oder unbeabsichtigte, fehlerhafte Abgascodierung, das heißt eine fehlerhafte Selektion der Abgasnorm mit der Folge, dass die für die nicht zutreffende Abgasnorm vorgesehenen Kennfelder und Diagnoseroutinen verwendet werden. Insbesondere wird verhindert, dass ein Fahrzeug, das einer (insbesondere der strengsten) Abgasnorm unterliegt, fehlerhaft mit einer weniger strengen Abgasnorm betrieben wird. Zu diesem Zweck umfasst der Speicher des Motorsteuergeräts 14 einen computerlesbaren Programmalgorithmus 200 zur Durchführung des erfindungsgemäßen Verfahrens zur Ermittlung einer Zugehörigkeit des Fahrzeugs zu einer Abgasnorm sowie ein im Programmalgorithmus 200 verwendetes Kennfeld KF. Das Kennfeld KF wird in Figur 4 näher erläutert und das Verfahren in Figur 5.

Figur 2 zeigt den Aufbau einer fiktiven Fahrzeug-Identifizierungsnummer VIN am Beispiel einer VIN für den nordamerikanischen Markt. Die VIN besteht aus 17 Stellen. Die Stellen 1 bis 3 dienen der Herstellerkennung (WMI) nach einem international festgelegten Code. Im vorliegenden Beispiel bedeutet WVW Volkswagen Deutschland. Stelle 4 bezeichnet im vorliegenden Beispiel die Baureihe (Modell). Stelle 5 enthält die Motortypkennung, mit der etwa die Kraftstofftypen (Benzin oder Diesel), Hubraum und/oder Motorleistungen gekennzeichnet werden. Die folgenden Stellen bezeichnen im vorliegenden Beispiel das Rückhaltesystem, den Fahrzeugtyp, die Prüfziffer, das Modelljahr, das Herstellerwerk. Die Stellen 12 bis 17 umfassen eine fahrzeugindividuelle fortlaufende Nummer. Im vorliegenden Verfahrensbeispiel, das später erläutert wird, werden die Stellen 1 bis 3 (Herstellerkennung) als eine erste Gruppe von Stellen S1, die Stelle 4 (Baureihenkennung) als eine zweite Stelle S2 und die Stelle 5 (Motortypkennung) als eine dritte Stelle S3 verwendet.

Figur 3 zeigt ein Beispiel für eine Abgascodiertabelle AC. Die Abgascodiertabelle enthält die Abgasnormen, für die das Motorsteuergerät 14 ausgelegt ist, das heißt eine entsprechende Bedatung enthält. Im vorliegenden Beispiel sind diese die für den nordamerikanischen Raum geltende Abgasnorm ULEF sowie die für den europäischen Raum geltende EU6. Im vorliegenden Beispiel stellt die Abgasnorm ULEF die strengere der beiden Abgasnormen dar und ist der Abgascodierung 0 zugeordnet. Die zweite, weniger strenge Abgasnorm EU6 ist der Abgascodierung 1 zugeordnet. Die weiteren vorliegenden Abgascodierungen werden im vorliegenden Beispiel nicht verwendet.

Figur 4 zeigt beispielhaft ein Kennfeld KF, wie es im vorliegenden Verfahren zum Einsatz kommt. In den Zeilen des Kennfelds KF sind sämtliche mögliche Kennwerte für die erste Stelle oder erste Gruppe von Stellen S1 der VIN (siehe Figur 2) eingetragen. Im vorliegenden Beispiel werden die Stellen 1 bis 3 der VIN als eine erste Gruppe von Stellen S1 verwendet, also die Herstellerkennung.

In den Spalten des Kennfelds KF sind sämtliche mögliche Kennwerte der zweiten Stelle oder Gruppe von Stellen S2 der VIN eingetragen. Im vorliegenden Beispiel wird als zweite Stelle S2 die die Baureihe kennzeichnende Stelle 4 der VIN verwendet.

Das Kennfeld ordnet nun den Kennwerten für S1 und S2 sämtliche Kennwerte für die dritte Stelle oder dritte Gruppe von Stellen S3 der VIN zu, welche kennzeichnend für Fahrzeuge sind, die der ersten, strengsten Abgasnorm 0 (für ULEF) zugehörig sind. Im vorliegenden Beispiel wird als dritte Stelle beziehungsweise Gruppe von Stellen S3 die Stelle 5 der VIN, die den Motortyp bezeichnet, verwendet. Beispielsweise existiert für den Fahrzeughersteller mit der Kennung SCB und der Baureihe E ein mit C codierter Motortyp, der der strengsten Abgasvariante unterliegt. Andere Motortypen, die der Abgasvariante 0 nicht unterliegen, jedoch für die Baureihe E des Herstellers SCB möglich sind, sind in dem Kennfeld nicht aufgeführt. Sofern das Kennfeld keine Eintragung enthält, bedeutet dies, dass für den entsprechenden Fahrzeughersteller und die entsprechende Baureihe kein Motortyp verwendet wird, welcher der ersten, strengsten Abgasvariante zugehört. Im dargestellten Beispiel enthält das Kennfeld in Figur 4 für den Fahrzeughersteller WVW und die Baureihe G zwei Einträge für den Motortyp (VIN Stelle 5), nämlich D und 4. Dies bedeutet, dass die Baureihe G des Herstellers WVW optional mit dem Motortyp D oder 4 ausgestattet sein kann, welche beide der strengsten Abgasnorm unterliegen.

In Figur 5 ist in groben Zügen der Ablauf des Programmalgorithmus 200 dargestellt, welcher die erfindungsgemäße Ermittlung der Zugehörigkeit des Fahrzeugs zu einer Abgasnorm ausführt.

In einem ersten Schritt 201 werden als eine erste Stelle oder Gruppe von Stellen S1 der VIN die Stellen 1 bis 3 (siehe Figur 2) eingelesen, die den Fahrzeughersteller unter Verwendung des Weltherstellercodes kennzeichnen. Zudem wird als eine zweite Stelle oder Gruppe von Stellen S2 die Stelle 4 der VIN eingelesen, welche die Baureihe kennzeichnet. In dem Beispiel gemäß Figur 2 wird für den Fahrzeughersteller S1 = WVW und die Baureihe S2 = F ermittelt. Sodann wird aus dem in Figur 4 gezeigten Kennfeld KF in Abhängigkeit von S1 (dem Fahrzeughersteller) und von S2 (der Baureihe) der entsprechende Kennwert KW für den Motortyp ermittelt. In dem Beispiel wird für den Fahrzeughersteller S1 = WVW und die Baureihe S2 = F der Kennwert KW = K für den Motortyp ermittelt.

Das Verfahren geht sodann zu Schritt 202 weiter, wo zunächst als eine dritte Stelle oder dritte Gruppe von Stellen S3 die Stelle 5 der VIN für den Motortyp (siehe Figur 2) eingelesen wird (S3=4). Dann erfolgt ein Vergleich, ob der aus dem Kennfeld KF ermittelte Kennwert KW = K der aus der VIN eingelesenen dritten Stelle oder Gruppe von Stellen S3 übereinstimmt. Im vorliegenden Beispiel wird in Schritt 202 also verglichen, ob der Kennwert KW = K aus dem Kennfeld KF der Figur 4 mit S3 = 4 der VIN übereinstimmt. Im vorliegenden Beispiel stimmt somit die Motorcodierung S3 der VIN nicht mit dem entsprechenden Kennwert KW des Kennfelds KF überein (K ≠ 4). Dies bedeutet, dass das Fahrzeug nicht der ersten, strengsten Abgasnorm (hier die Norm ULEF) unterliegt, da das Kennfeld keinen Eintrag "4" für S1 = WVW und S2 = F enthält. In diesem Fall wird die Abfrage mit "Nein" beantwortet, und das Verfahren geht zu Schritt 205 weiter, mit dem Resultat, dass das Verfahren beendet ist und kein Fehlerspeichereintrag FSPE erzeugt wird.

Wird andernfalls in der Abfrage 202 festgestellt, dass der Motortypkennwert KW des Kennfelds KF mit der entsprechenden dritten Stelle S3 der VIN übereinstimmt, bedeutet dies, dass das Fahrzeug der ersten, strengsten Abgasnorm unterliegt. In diesem Fall geht das Verfahren zu Schritt 203 weiter, wo überprüft wird, ob in der Abgascodiertabelle AC (siehe Figur 3) eine andere als die erste Abgascodierung ausgewählt ist. Wird die Abfrage in Schritt 203 verneint, das heißt, es wurde die richtige Abgasvariante codiert, geht das Verfahren zu Schritt 205 weiter und endet hier, indem kein Fehlerspeichereintrag generiert wird. Wird die Abfrage in Schritt 203 hingegen bejaht, das heißt, es wurde eine andere Abgascodierung als die erste ausgewählt, so geht das Verfahren zu Schritt 204 weiter, wo ein Fehlerspeichereintrag FSPE generiert wird. Gleichzeitig wird als weitere Maßnahme die Abgascodierung auf die als richtig festgestellte Abgascodierung entsprechend der ersten Abgasnorm ausgewählt und für die weitere Motorsteuerung und/oder Onboard-Diagnostik verwendet. Alternativ kann eine Startfreigabe des Fahrzeugs verweigert werden.

Das in Figur 5 dargestellte Verfahren kann routinemäßig, beispielsweise bei jedem Motorstart, durchgeführt werden. Alternativ ist möglich, dass das Verfahren nur nach einem Eingriff in das Motorsteuergerät 14 oder einem Austausch desselben initialisiert wird.

Das Verfahren stellt somit ausschließlich unter Verwendung der VIN und des Kennfelds KF sicher, dass in der Motorsteuerung die strengste Abgasnorm verwendet wird, sofern das Fahrzeug dieser zugeordnet ist.

Sofern das Motorsteuergerät über mehr als zwei Abgasnormen verfügt, beispielsweise über drei Abgasnormen, so kann das Verfahren vorsehen, dass sowohl für die strengste Abgasnorm als auch die zweitstrengste Abgasnorm jeweils ein eigenes Kennfeld gemäß Figur 4 vorgesehen und gespeichert ist, wobei das Verfahren sequentiell erst mit dem ersten Kennfeld für die strengste Abgasnorm durchgeführt wird und anschließend erforderlichenfalls für das zweite Kennfeld für die zweitstrengste Abgasnorm.

### Bezugszeichenliste

- 100: Fahrzeug
- 10: Verbrennungskraftmaschine
- 11: Abgaskanal
- 12: Abgasnachbehandlungseinrichtung
- 13: Abgassensor
- 14: Fahrzeug-Computer / Motorsteuergerät

- 200: Programmalgorithmus zur Durchführung des Verfahrens

- AC: Abgascodiertabelle
- KF: Kennfeld
- KW: Kennwert
- OBD: Onboard-Diagnostik
- VIN: Fahrzeug-Identifizierungsnummer
- S1: erste Stelle oder erste Gruppe von Stellen der VIN
- S2: zweite Stelle oder zweite Gruppe von Stellen der VIN
- S3: dritte Stelle oder dritte Gruppe von Stellen der VIN

## Patentansprüche

1. Verfahren in einem Fahrzeug-Computer (14) zur Prüfung einer in einem Fahrzeug ausgewählten Abgascodierung, wobei eine Abgascodierung jeweils einer Abgasnorm aus einer Gruppe von Abgasnormen, umfassend eine erste Abgasnorm und mindestens eine zweite Abgasnorm, zugeordnet ist, wobei die erste und die zumindest eine zweite Abgasnorm in dem Fahrzeug-Computer (14) gespeichert sind und die Steuerung des Verbrennungsmotors durch ein Motorsteuergerät bestimmen sowie Routinen einer Onboard-Diagnostik zum Überwachen einer Funktion des Abgassystems definieren, mit den Schritten:
(a) Einlesen einer ersten Stelle oder ersten Gruppe von Stellen (S1) einer in dem Fahrzeug-Computer gespeicherten, computerlesbaren Fahrzeug-Identifizierungsnummer (VIN), Einlesen einer zweiten Stelle oder zweiten Gruppe von Stellen (S2) der Fahrzeug-Identifizierungsnummer (VIN) und Einlesen einer dritten Stelle oder dritten Gruppe von Stellen (S3) der Fahrzeug-Identifizierungsnummer (VIN),
(b) Bereitstellen eines in dem Fahrzeug-Computer gespeicherten, computerlesbaren Kennfelds (KF), welches der ersten Stelle oder ersten Gruppe von Stellen (S1) und der zweiten Stelle oder zweiten Gruppe von Stellen (S2) der Fahrzeug-Identifizierungsnummer (VIN) solche Kennwerte (KW) der dritten Stelle oder dritten Gruppe von Stellen (S3) von Fahrzeug-Identifizierungsnummern (VIN) zuordnet, die ein der ersten Abgasnorm zugehöriges Fahrzeug kennzeichnen,
(c) Vergleich der eingelesenen dritten Stelle oder dritten Gruppe von Stellen (S3) der Fahrzeug-Identifizierungsnummer (VIN) mit dem Kennwert (KW) aus dem Kennfeld (KF), das der eingelesenen ersten Stelle oder ersten Gruppe von Stellen (S1) und der eingelesenen zweiten Stelle oder zweiten Gruppe von Stellen (S2) der Fahrzeug-Identifizierungsnummer (VIN) zugeordnet ist,
(d) in Abhängigkeit von einer festgestellten Übereinstimmung oder Nichtübereinstimmung des Kennwerts (KW) des Kennfelds (KF) und der eingelesenen dritten Stelle oder dritten Gruppe von Stellen (S3) der Fahrzeug-Identifizierungsnummer (VIN) Feststellen, ob das Fahrzeug der ersten Abgasnorm zugehörig ist oder nicht,
(e) im Falle einer in Schritt (d) festgestellten Zugehörigkeit des Fahrzeugs zu der ersten Abgasnorm Vergleichen, ob eine im Fahrzeug-Computer (14) ausgewählte Abgasnorm der ersten Abgasnorm entspricht, und
(f) wenn in Schritt (e) festgestellt wird, dass die ausgewählte Abgascodierung der festgestellten ersten Abgasnorm nicht entspricht, Ausführen mindestens einer der folgenden Maßnahmen:
Auswählen und Anwenden der ersten Abgasnorm im Fahrzeug-Computer (14), um zu verhindern, dass das Fahrzeug fehlerhaft mit einer weniger strengen Abgasnorm als der ersten Abgasnorm betrieben wird, oder
Unterbinden einer Startfreigabe, wodurch das Fahrzeug nicht gestartet und bewegt werden kann,
wobei zusätzlich folgende Maßnahme ausgeführt werden kann:
Erzeugen eines Fehlersignals durch Speichern eines Fehlereintrags in einem Fehlerspeicher des Fahrzeugs.

2. Verfahren nach Anspruch 1, **dadurch gekennzeichnet, dass** die erste Stelle oder erste Gruppe von Stellen (S1) der gespeicherten Fahrzeug-Identifizierungsnummer (VIN) einer Herstellerkennung des Fahrzeugs entspricht.

3. Verfahren nach Anspruch 1 oder 2, **dadurch gekennzeichnet, dass** die zweite Stelle oder zweite Gruppe von Stellen (S2) der gespeicherten Fahrzeug-Identifizierungsnummer (VIN) einer Baureihenkennung des Fahrzeugs entspricht.

4. Verfahren nach einem der vorhergehenden Ansprüche, **dadurch gekennzeichnet, dass** die dritte Stelle oder dritte Gruppe von Stellen (S3) der gespeicherten Fahrzeug-Identifizierungsnummer (VIN) einer Motortypkennung des Fahrzeugs entspricht.

5. Verfahren nach einem der vorhergehenden Ansprüche, **dadurch gekennzeichnet, dass** die erste Abgasnorm einer strengeren Abgasnorm entspricht als die zumindest eine zweite Abgasnorm, insbesondere der strengsten Abgasnormen, für die der Fahrzeug-Computer (14) eingerichtet ist.

6. Verfahren nach einem der vorhergehenden Ansprüche, **dadurch gekennzeichnet, dass** die Fahrzeug-Identifizierungsnummer (VIN) in einer verschlüsselten Form gespeichert vorliegt.

7. Verfahren nach einem der vorhergehenden Ansprüche, **dadurch gekennzeichnet, dass** die verschiedenen Abgasnormen in einer Abgascodiertabelle (AC) gespeichert sind, wobei die strengste Abgasnorm der niedrigsten Codierziffer zugeordnet ist.

8. Fahrzeug-Computer (14) für ein Fahrzeug (100), eingerichtet zur Durchführung des Verfahrens nach einem der Ansprüche 1 bis 7 zur Prüfung einer in einem Fahrzeug ausgewählten Abgascodierung, wobei eine Abgascodierung jeweils einer Abgasnorm aus einer Gruppe von Abgasnormen, umfassend eine erste Abgasnorm und mindestens eine zweite Abgasnorm, zugeordnet ist, wobei die erste und die zumindest eine zweite Abgasnorm in dem Fahrzeug-Computer (14) gespeichert sind und die Steuerung des Verbrennungsmotors durch ein Motorsteuergerät bestimmen sowie Routinen einer Onboard-Diagnostik zum Überwachen einer Funktion des Abgassystems definieren.

9. Fahrzeug-Computer (14) nach Anspruch 8, umfassend
- einen computerlesbaren und computerausführbaren Programmalgorithmus (200) zur Ausführung des Verfahrens;
- eine computerlesbare Fahrzeug-Identifizierungsnummer (VIN), mindestens umfassend eine erste Stelle oder erste Gruppe von Stellen (S1), eine zweite Stelle oder zweite Gruppe von Stellen (S2) und eine dritte Stelle oder dritte Gruppe von Stellen (S3), sowie
- ein computerlesbares Kennfeld (KF), welches der ersten Stelle oder ersten Gruppe von Stellen (S1) und der zweiten Stelle oder zweiten Gruppe von Stellen (S2) der Fahrzeug-Identifizierungsnummer (VIN) solche Kennwerte (KW) der dritten Stelle oder dritten Gruppe von Stellen (S3) von Fahrzeug-Identifizierungsnummern (VIN) zuordnet, die ein der ersten Abgasnorm zugehöriges Fahrzeug kennzeichnen.

10. Fahrzeug-Computer (14) nach Anspruch 9, wobei der Programmalgorithmus (200) zur Ausführung folgender Schritte eingerichtet ist:
(a) Einlesen der ersten Stelle oder ersten Gruppe von Stellen (S1) der Fahrzeug-Identifizierungsnummer (VIN), Einlesen der zweiten Stelle oder zweiten Gruppe von Stellen (S2) der Fahrzeug-Identifizierungsnummer (VIN) und Einlesen der dritten Stelle oder dritten Gruppe von Stellen (S3) der Fahrzeug-Identifizierungsnummer (VIN),
(b) Einlesen eines Kennwerts (KW) aus dem Kennfeld (KF), welcher der in Schritt (a) eingelesenen ersten Stelle oder ersten Gruppe von Stellen (S1) und der zweiten Stelle oder zweiten Gruppe von Stellen (S2) der Fahrzeug-Identifizierungsnummer (VIN) zugeordnet ist,
(c) Vergleich der in Schritt (a) eingelesenen dritten Stelle oder dritten Gruppe von Stellen (S3) der Fahrzeug-Identifizierungsnummer (VIN) mit dem in Schritt (b) eingelesenen Kennwert (KW) aus dem Kennfeld (KF),
(d) Feststellen, ob das Fahrzeug der ersten Abgasnorm zugehörig ist oder nicht, in Abhängigkeit von einer festgestellten Übereinstimmung oder Nichtübereinstimmung des Kennwerts (KW) des Kennfelds (KF) und der eingelesenen dritten Stelle oder dritten Gruppe von Stellen (S3) der Fahrzeug-Identifizierungsnummer (VIN),
(e) im Falle einer in Schritt (d) festgestellten Zugehörigkeit des Fahrzeugs zu der ersten Abgasnorm Vergleichen, ob eine im Fahrzeug-Computer (14) ausgewählte Abgasnorm der ersten Abgasnorm entspricht, und
(f) wenn in Schritt (e) festgestellt wird, dass die ausgewählte Abgascodierung der festgestellten ersten Abgasnorm nicht entspricht, Ausführen mindestens einer der folgenden Maßnahmen:
Auswählen und Anwenden der ersten Abgasnorm im Fahrzeug-Computer (14), um zu verhindern, dass das Fahrzeug fehlerhaft mit einer weniger strengen Abgasnorm als der ersten Abgasnorm betrieben wird, oder
Unterbinden einer Startfreigabe, wodurch das Fahrzeug nicht gestartet und bewegt werden kann,
wobei zusätzlich folgende Maßnahme ausgeführt werden kann:
Erzeugen eines Fehlersignals durch Speichern eines Fehlereintrags in einem Fehlerspeicher des Fahrzeugs.

11. Fahrzeug-Computer (14) nach einem der Ansprüche 8 bis 10, ferner umfassend:
- eine computerlesbare Abgascodiertabelle (AC), welche einer Mehrzahl von mindestens zwei Abgasnormen jeweils einer Abgascodierung zuordnet, wobei vorzugsweise die strengste Abgasnorm der ersten Stelle beziehungsweise der Abgascodierung mit der niedrigsten numerischen Zahl zugeordnet ist.

12. Fahrzeug, umfassend einen Fahrzeug-Computer (14) nach einem der Ansprüche 8 bis 11.

## Claims

1. Method in a vehicle computer (14) for checking an exhaust gas coding selected in a vehicle, wherein an exhaust gas coding is respectively assigned to an exhaust gas standard from a group of exhaust gas standards comprising a first exhaust gas standard and at least one second exhaust gas standard, wherein the first exhaust gas standard and the at least one second exhaust gas standard are stored in the vehicle computer (14) and determine the control of the internal combustion engine by an engine control unit and define routines of on-board diagnostics for monitoring a function of the exhaust gas system, having the steps of:
(a) reading in a first digit or a first group of digits (S1) of a computer-readable vehicle identification number (VIN) stored in the vehicle computer, reading in a second digit or a second group of digits (S2) of the vehicle identification number (VIN) and reading in a third digit or a third group of digits (S3) of the vehicle identification number (VIN),
(b) providing a computer-readable characteristic map (KF) which is stored in the vehicle computer and assigns those characteristic values (KW) of the third digit or third group of digits (S3) of vehicle identification numbers (VIN) which indicate a vehicle belonging to the first exhaust gas standard to the first digit or first group of digits (S1) and to the second digit or second group of digits (S2) of the vehicle identification number (VIN),
(c) comparing the read-in third digit or third group of digits (S3) of the vehicle identification number (VIN) with that characteristic value (KW) from the characteristic map (KF) which is assigned to the read-in first digit or first group of digits (S1) and to the read-in second digit or second group of digits (S2) of the vehicle identification number (VIN),
(d) determining whether or not the vehicle belongs to the first exhaust gas standard on the basis of determined correspondence or lack of correspondence between the characteristic value (KW) of the characteristic map (KF) and the read-in third digit or third group of digits (S3) of the vehicle identification number (VIN),
(e) if it is determined in step (d) that the vehicle belongs to the first exhaust gas standard, comparing whether an exhaust gas standard selected in the vehicle computer (14) corresponds to the first exhaust gas standard, and
(f) if it is determined in step (e) that the selected exhaust gas coding does not correspond to the determined first exhaust gas standard, carrying out at least one of the following measures:
selecting and using the first exhaust gas standard in the vehicle computer (14) in order to prevent the vehicle from being incorrectly operated with a less strict exhaust gas standard than the first exhaust gas standard, or
preventing a starting clearance, as a result of which the vehicle cannot be started and moved,
wherein the following measure can be additionally carried out:
generating an error signal by storing an error entry in an error memory of the vehicle.

2. Method according to Claim 1, **characterized in that** the first digit or first group of digits (S1) of the stored vehicle identification number (VIN) corresponds to a manufacturer identifier of the vehicle.

3. Method according to Claim 1 or 2, **characterized in that** the second digit or second group of digits (S2) of the stored vehicle identification number (VIN) corresponds to a series identifier of the vehicle.

4. Method according to one of the preceding claims, **characterized in that** the third digit or third group of digits (S3) of the stored vehicle identification number (VIN) corresponds to an engine type identifier of the vehicle.

5. Method according to one of the preceding claims, **characterized in that** the first exhaust gas standard corresponds to a stricter exhaust gas standard than the at least one second exhaust gas standard, in particular the strictest exhaust gas standard, for which the vehicle computer (14) is configured.

6. Method according to one of the preceding claims, **characterized in that** the vehicle identification number (VIN) is stored in an encrypted form.

7. Method according to one of the preceding claims, **characterized in that** the various exhaust gas standards are stored in an exhaust gas coding table (AC), wherein the strictest exhaust gas standard is assigned to the lowest coding number.

8. Vehicle computer (14) for a vehicle (100), configured to carry out the method according to one of Claims 1 to 7 for checking an exhaust gas coding selected in a vehicle, wherein an exhaust gas coding is respectively assigned to an exhaust gas standard from a group of exhaust gas standards comprising a first exhaust gas standard and at least one second exhaust gas standard, wherein the first exhaust gas standard and the at least one second exhaust gas standard are stored in the vehicle computer (14) and determine the control of the internal combustion engine by an engine control unit and define routines of on-board diagnostics for monitoring a function of the exhaust gas system.

9. Vehicle computer (14) according to Claim 8, comprising
- a computer-readable and computer-executable program algorithm (200) for carrying out the method;
- a computer-readable vehicle identification number (VIN) at least comprising a first digit or a first group of digits (S1), a second digit or a second group of digits (S2) and a third digit or a third group of digits (S3), and
- a computer-readable characteristic map (KF) which assigns those characteristic values (KW) of the third digit or third group of digits (S3) of vehicle identification numbers (VIN) which indicate a vehicle belonging to the first exhaust gas standard to the first digit or first group of digits (S1) and to the second digit or second group of digits (S2) of the vehicle identification number (VIN).

10. Vehicle computer (14) according to Claim 9, wherein the program algorithm (200) is configured to carry out the following steps:
(a) reading in the first digit or first group of digits (S1) of the vehicle identification number (VIN), reading in the second digit or second group of digits (S2) of the vehicle identification number (VIN) and reading in the third digit or third group of digits (S3) of the vehicle identification number (VIN),
(b) reading in a characteristic value (KW) from the characteristic map (KF) which is assigned to the first digit or first group of digits (S1) and to the second digit or second group of digits (S2) of the vehicle identification number (VIN) read in in step (a),
(c) comparing the third digit or third group of digits (S3) of the vehicle identification number (VIN) read in in step (a) with the characteristic value (KW) from the characteristic map (KF) read in in step (b),
(d) determining whether or not the vehicle belongs to the first exhaust gas standard on the basis of determined correspondence or lack of correspondence between the characteristic value (KW) of the characteristic map (KF) and the read-in third digit or third group of digits (S3) of the vehicle identification number (VIN),
(e) if it is determined in step (d) that the vehicle belongs to the first exhaust gas standard, comparing whether an exhaust gas standard selected in the vehicle computer (14) corresponds to the first exhaust gas standard, and
(f) if it is determined in step (e) that the selected exhaust gas coding does not correspond to the determined first exhaust gas standard, carrying out at least one of the following measures:
selecting and using the first exhaust gas standard in the vehicle computer (14) in order to prevent the vehicle from being incorrectly operated with a less strict exhaust gas standard than the first exhaust gas standard, or
preventing a starting clearance, as a result of which the vehicle cannot be started and moved,
wherein the following measure can be additionally carried out:
generating an error signal by storing an error entry in an error memory of the vehicle.

11. Vehicle computer (14) according to one of Claims 8 to 10, also comprising:
- a computer-readable exhaust gas coding table (AC) which respectively assigns an exhaust gas coding to a plurality of at least two exhaust gas standards, wherein the strictest exhaust gas standard is preferably assigned to the first digit or to the exhaust gas coding with the lowest numerical number.

12. Vehicle comprising a vehicle computer (14) according to one of Claims 8 to 11.

## Revendications

1. Procédé mis en oeuvre dans un ordinateur de véhicule (14) et destiné à tester un codage de gaz d'échappement sélectionné dans un véhicule, un codage de gaz d'échappement étant associé à une norme de gaz d'échappement appartenant à un groupe de normes de gaz d'échappement comprenant une première norme de gaz d'échappement et au moins une deuxième norme de gaz d'échappement, la première et l'au moins une deuxième norme de gaz d'échappement étant mémorisées dans l'ordinateur de véhicule (14) et déterminant la commande du moteur à combustion interne par un dispositif de commande de moteur et définissant des sous-programmes de diagnostic embarqué destiné à surveiller une fonction du système de gaz d'échappement, le procédé comprenant les étapes suivantes :
(a) lire un premier chiffre ou premier groupe de chiffres (S1) d'un numéro d'identification de véhicule (VIN) lisible par ordinateur et mémorisé dans l'ordinateur de véhicule, lire un deuxième chiffre ou deuxième groupe de chiffres (S2) du numéro d'identification de véhicule (VIN) et lire un troisième chiffre ou troisième groupe de chiffres (S3) du numéro d'identification de véhicule (VIN),
(b) fournir une zone caractéristique (KF), lisible par ordinateur et mémorisée dans l'ordinateur de véhicule, qui associe au premier chiffre ou premier groupe de chiffres (S1) et au deuxième chiffre ou deuxième groupe de chiffres (S2) du numéro d'identification de véhicule (VIN) des valeurs caractéristiques (KW) du troisième chiffre ou troisième groupe de chiffres (S3) de numéros d'identification de véhicule (VIN) qui caractérisent un véhicule appartenant à la première norme de gaz d'échappement,
(c) comparer le troisième chiffre ou troisième groupe de chiffres (S3) lu du numéro d'identification de véhicule (VIN) à la valeur caractéristique (KW) de la zone caractéristique (KF), qui est associée au premier chiffre ou premier groupe de chiffres (S1) lu et au deuxième chiffre ou deuxième groupe de chiffres (S2) lu du numéro d'identification de véhicule (VIN),
(d) déterminer si le véhicule correspond à la première norme de gaz d'échappement en fonction d'une concordance ou absence de concordance détectée entre la valeur caractéristique (KW) de la zone caractéristique (KF) et le troisième chiffre ou troisième groupe de chiffres (S3) lu du numéro d'identification de véhicule (VIN),
(e) en cas d'appartenance, déterminée à l'étape (d), du véhicule à la première norme de gaz d'échappement, effectuer une comparaison pour voir si une norme de gaz d'échappement, sélectionnée dans l'ordinateur de véhicule (14), correspond à la première norme de gaz d'échappement, et
(f) s'il est déterminé à l'étape (e) que le codage de gaz d'échappement sélectionné ne correspond pas à la première norme d'émission déterminée, effectuer l'une au moins des actions suivantes :
sélectionner et appliquer la première norme de gaz d'échappement dans l'ordinateur de véhicule (14) afin d'éviter que le véhicule ne soit utilisé de manière erronée avec une norme de gaz d'échappement moins stricte que la première norme de gaz d'échappement, ou interdire le déverrouillage du démarrage de manière à ce que le véhicule ne puisse pas être démarré et déplacé,
l'action suivante pouvant en plus être effectuée :
générer un signal d'erreur par mémorisation d'une entrée d'erreur dans une mémoire d'erreur du véhicule.

2. Procédé selon la revendication 1, **caractérisé en ce que** le premier chiffre ou premier groupe de chiffres (S1) du numéro d'identification de véhicule (VIN) mémorisé correspond à un identifiant de fabricant de véhicule.

3. Procédé selon la revendication 1 ou 2, **caractérisé en ce que** le deuxième chiffre ou deuxième groupe de chiffres (S2) du numéro d'identification de véhicule (VIN) mémorisé correspond à un identifiant de série de véhicule.

4. Procédé selon l'une des revendications précédentes, **caractérisé en ce que** le troisième chiffre ou troisième groupe de chiffres (S3) du numéro d'identification de véhicule (VIN) mémorisé correspond à un identifiant de type de moteur du véhicule.

5. Procédé selon l'une des revendications précédentes, **caractérisé en ce que** la première norme de gaz d'échappement est une norme de gaz d'échappement plus stricte que l'au moins une deuxième norme de gaz d'échappement, en particulier aux normes de gaz d'échappement les plus strictes pour lesquelles l'ordinateur de véhicule (14) est conçu.

6. Procédé selon l'une des revendications précédentes, **caractérisé en ce que** le numéro d'identification de véhicule (VIN) est mémorisé sous une forme cryptée.

7. Procédé selon l'une des revendications précédentes, **caractérisé en ce que** les différentes normes de gaz d'échappement sont mémorisées dans une table de codage de gaz d'échappement (AC), la norme de gaz d'échappement la plus stricte étant associée au plus petit chiffre de codage.

8. Ordinateur de véhicule (14) destiné à un véhicule (100) conçu pour mettre en oeuvre le procédé selon l'une des revendications 1 à 7 afin de tester un codage de gaz d'échappement sélectionné dans un véhicule, un codage de gaz d'échappement étant associé à une norme de gaz d'échappement appartenant à un groupe de normes de gaz d'échappement comprenant une première norme de gaz d'échappement et au moins une deuxième norme de gaz d'échappement, la première norme de gaz d'échappement et l'au moins une deuxième norme de gaz d'échappement étant mémorisées dans l'ordinateur de véhicule (14) et déterminant la commande du moteur à combustion interne par un dispositif de commande de moteur et définissant des sous-programmes de diagnostic embarqué destinés à surveiller le fonctionnement du système de gaz d'échappement.

9. Ordinateur de véhicule (14) selon la revendication 8, comprenant
- un algorithme de programme (200) lisible par ordinateur et exécutable par ordinateur pour mettre en oeuvre le procédé ;
- un numéro d'identification de véhicule (VIN), lisible par ordinateur, comprenant au moins un premier chiffre ou premier groupe de chiffres (S1), un deuxième chiffre ou deuxième groupe de chiffres (S2) et un troisième chiffre ou troisième groupe de chiffres (S3) ;
- une zone caractéristique (KF), lisible par ordinateur, qui associe au premier chiffre ou premier groupe de chiffres (S1) et au deuxième chiffre ou deuxième groupe de chiffres (S2) du numéro d'identification de véhicule (VIN) des valeurs caractéristiques (KW) du troisième chiffre ou troisième groupe de chiffres (S3) de numéros d'identification de véhicule (VIN) qui caractérisent un véhicule appartenant à la première norme de gaz d'échappement.

10. Ordinateur de véhicule (14) selon la revendication 9, l'algorithme de programme (200) étant conçu pour effectuer les étapes suivantes :
(a) lire le premier chiffre ou premier groupe de chiffres (S1) du numéro d'identification du véhicule (VIN), lire le deuxième chiffre ou deuxième groupe de chiffres (S2) du numéro d'identification de véhicule (VIN) et lire le troisième chiffre ou troisième groupe de chiffres (S3) du numéro d'identification de véhicule (VIN),
(b) lire dans la zone caractéristique (KF) une valeur caractéristique (KW) qui est associée au premier chiffre ou premier groupe de chiffres (S1) lu à l'étape (a) et du deuxième chiffre ou deuxième groupe de chiffres (S2) du numéro d'identification de véhicule (VIN),
(c) comparer le troisième chiffre ou troisième groupe de chiffres (S3), lu à l'étape (a), du numéro d'identification de véhicule (VIN) à la valeur caractéristique (KW) lue à l'étape (b) dans la zone caractéristique (KF),
(d) déterminer si le véhicule correspond à la première norme de gaz d'échappement en fonction d'une concordance ou absence de concordance détectée entre la valeur caractéristique (KW) de la zone caractéristique (KF) et le troisième chiffre ou troisième groupe de chiffres (S3) lu du numéro d'identification de véhicule (VIN),
(e) en cas d'appartenance, déterminée à l'étape (d), du véhicule à la première norme de gaz d'échappement, effectuer une comparaison pour voir si une norme de gaz d'échappement, sélectionnée dans l'ordinateur de véhicule (14), correspond à la première norme de gaz d'échappement, et
(f) s'il est déterminé à l'étape (e) que le codage de gaz d'échappement sélectionné ne correspond pas à la première norme d'émission déterminée, effectuer l'une au moins des actions suivantes :
sélectionner et appliquer la première norme de gaz d'échappement dans l'ordinateur de véhicule (14) afin d'éviter que le véhicule ne soit utilisé de manière erronée avec une norme de gaz d'échappement moins stricte que la première norme de gaz d'échappement, ou
interdire le déverrouillage du démarrage de manière à ce que le véhicule ne puisse pas être démarré et déplacé,
l'action suivante pouvant en plus être effectuée :
générer un signal d'erreur par mémorisation d'une entrée d'erreur dans une mémoire d'erreur du véhicule.

11. Ordinateur de véhicule (14) selon l'une des revendications 8 à 10, comprenant en outre :
- une table de codage de gaz d'échappement (AC), lisible par ordinateur, qui associe un codage de gaz d'échappement à chacun d'une pluralité d'au moins deux normes d'échappement, la norme de gaz d'échappement la plus stricte étant de préférence, associée au premier chiffre ou au codage de gaz d'échappement ayant le nombre le plus faible.

12. Véhicule comprenant un ordinateur de véhicule (14) selon l'une des revendications 8 à 11.
